Europäisches Patentamt

European Patent Office

Office européen des brevets

(19)

(11)    EP 0 491 337 B1

(12)    **EUROPEAN PATENT SPECIFICATION**

(45) Date of publication and mention
of the grant of the patent:
**20.11.1996  Bulletin 1996/47**

(51) Int Cl.$^6$: **G11B 11/10**, G11B 13/04,
G11B 11/12

(21) Application number: **91121557.2**

(22) Date of filing: **16.12.1991**

(54) **Magneto-optical recording medium**

Magnetooptischer Aufzeichnungsträger

Milieu magnéto-optique d'enregistrement

(84) Designated Contracting States:
**DE FR GB**

(30) Priority: **19.12.1990  JP  411664/90**
**13.03.1991  JP  72199/91**

(43) Date of publication of application:
**24.06.1992  Bulletin 1992/26**

(73) Proprietor: **SONY CORPORATION**
**Tokyo (JP)**

(72) Inventors:
 • **Shimoma, Takashi**
**Shinagawa-ku Tokyo (JP)**
 • **Suzuki, Kayoko**
**Shinagawa-ku Tokyo (JP)**
 • **Nakaoki, Ariyoshi**
**Shinagawa-ku Tokyo (JP)**
 • **Muto, Yoshihiro**
**Shinagawa-ku Tokyo (JP)**

(74) Representative:
**TER MEER - MÜLLER - STEINMEISTER &**
**PARTNER**
**Mauerkircherstrasse 45**
**81679 München (DE)**

(56) References cited:
**EP-A- 0 257 530          EP-A- 0 352 548**
**EP-A- 0 385 786          EP-A- 0 391 734**

 • **Patent abstracts of Japan, unexamined**
**applications, P field, vol. 12, no. 271, July 28,**
**1988 page 21 P 736**

**Description**

**<u>BACKGROUND OF THE INVENTION</u>**

<u>Field of the Invention:</u>

This invention relates to a magneto-optical recording medium and more particularly, to a magneto-optical recording medium of the overwriting type wherein information signals can be recorded by a so-called photo intensity modulation system.

<u>Description of the Prior Art:</u>

The overwriteable photo intensity modulation system is one which is attained by the use of an exchange-interacted magnetic double-layer film or an exchange-interacted magnetic three-layer film. The fundamental working principle of this system has been already proposed in Japanese Laid-open Patent Application No. 63-52354, assigned to the present applicant, and incorporated herein.

The photo intensity modulation system is briefly described. In the photo intensity modulation system, there is used a magneto-optical recording medium which includes a built-up structure of first and second rare earth/transition metal magnetic thin films. In a first heating condition, while applying a first given external magnetic field the medium is heated to a first temperature $T_1$, which is not lower than the Curie point $T_{c1}$ of the first magnetic thin film, but at which the magnetization of sublattices of the second magnetic thin film is not inverted. In a second heating condition the medium is heated to a second temperature which is higher than $T_{c1}$ and at which the sublattice magnetization of the second magnetic thin film is inverted. These heating conditions are modulated by switching, depending on information to be recorded, e.g. "0" or "1". During the course of a cooling step, the direction of the sublattice magnetization of the first magnetic thin film is aligned with the direction of the sublattice magnetization of the second magnetic thin film by the exchange interaction force between the first and second magnetic thin films, thereby forming a recorded bit (magnetic domain), for example of "0" or "1" in the first magnetic thin film. At the same time, by application of a second external magnetic field or by proper selection of a composition of the second magnetic thin film such that the compensation temperature of the second magnetic thin film is in the range of from room temperature to the second temperature $T_2$, the sublattice magnetization of the second magnetic thin film is inverted by the action of the first external magnetic field at room temperature, thus ensuring an overwriteable condition.

The photo intensity modulation system has several advantages including that a specific procedure (time) is not required for erasure and a high transfer rate can be achieved. However, we extensively made further investigations and, as a result, found that when magneto-optical recording mediums for use in this system are fabricated, some types of mediums have non-practical characteristics, although they satisfy conditions regarding overwriting operations.

For example, among overwriting operations, the transfer conditions for realizing the erasing operation are given below:

$$\sigma_w/2M_{s1}h_1 - H_{c1} > H_{ex} \qquad (1)$$

$$\sigma_w/2M_{s2}h_2 + H_{ex} > H_{c2} \qquad (2)$$

wherein $\sigma_w$ is an interfacial magnetic wall energy, $M_{s1}$, is a saturation magnetization of a first magnetic thin film, $M_{s2}$ is a saturation magnetization of a second magnetic thin film, $h_1$ is a thickness of the first magnetic thin film, $h_2$ is a thickness of the second magnetic thin film, $H_{c1}$ is a coercive force of the first magnetic thin film, $H_{c2}$ is a coercive force of the second magnetic thin film, and $H_{ex}$ is an external magnetic field (recording magnetic field).

When the equations (1) and (2) are satisfied in the vicinity of the Curie point of the first magnetic thin film, the first magnetic thin film undergoes transfer from the second magnetic thin film by which erasure is performed.

In the magneto-optical recording medium of EP-A-0352548 conditions necessary for overwriting in a photo intensity modulation system are to satisfy both the following relationships at room temperature:

$$H_{c1} > \sigma_w/2M_{s1}h_1$$

$$H_{c2} > \sigma_w/2M_{s2}h_2$$

$$H_{c1} \pm \sigma_w/2M_{s1}h_1 > H_{sub}$$

$$H_{c2} \pm \sigma_w/2M_{s2}h_2 < H_{sub}.$$

Then the following relationships in the vicinity of the Curie point of the first magnetic thin film are to be satisfied:

$$\sigma_w/2M_{s1}h_1 > H_{c1} + H_{ex}$$

$$H_{c2} - \sigma_w/2M_{s2}h_2 > H_{ex}.$$

Among magneto-optical recording mediums which satisfy the above conditions, there are some mediums which cannot have a great CN ratio, or wherein the transfer starts to take place in the vicinity of reproduction power.

Accordingly, there is a great possibility that even though overwriting in a test drive machine proceeds satisfactorily, such a medium is not usable in a mass-produced drive system. More particularly, to give consideration only to overwriting conditions may make it difficult to allow a satisfactory margin for the mass production.

## SUMMARY OF THE INVENTION

It is accordingly an object of the invention to provide a magneto-optical recording medium which ensures stable overwriting operations and stable read-out operations.

It is another object of the invention to provide a magneto-optical recording medium which exhibits a satisfactory C/N ratio.

It is a further object of the invention to provide a magneto-optical recording medium which comprises an exchange-interacted, magnetic double-layer or three-layer structure as a recording layer wherein the compositions and thicknesses of the respective layers are properly selected to control the change in temperature characteristic of an inversional magnetic field of the respective layers whereby the medium is imparted with practically satisfactory overwriting characteristics.

According to the invention, there is provided a magneto-optical recording medium of the type which comprises, on a transparent substrate, a built-up layer having a first magnetic thin film and a second magnetic thin film magnetically coupled with each other. Information signals are rewriteable by control of a heating temperature. When the first magnetic thin film is defined to have a Curie point $T_{c1}$, a coercive force $H_{c1}$, a saturation magnetization $M_{c1}$, and a thickness $h_1$, the second magnetic thin film is defined to have a Curie point $T_{c2}$, a coercive force $H_{c2}$, a saturation magnetization $M_{s2}$, and a thickness $h_2$, and a magnetic wall energy is $\sigma_w$, an external magnetic field applied at the time of recording is $H_{ex}$, and an external sub-magnetic field is $H_{sub}$, then the following relationships are satisfied at room temperature:

$$H_{c1} > \sigma_w/2M_{s1}h_1$$

$$H_{c2} > \sigma_w/2M_{s2}h_2$$

$$H_{c1} \pm \sigma_w/2M_{s1}h_1 > H_{sub}$$

$$H_{c2} \pm \sigma_w/2M_{s2}h_2 < H_{sub},$$

and the following relationships are satisfied in the vicinity of the Curie point $T_{c1}$:

$$\sigma_w/2M_{s1}h_1 > H_{c1} + H_{ex}$$

$$H_{c2} - \sigma_w/2M_{s2}h_2 > H_{ex}.$$

Also, a temperature $T_0$ at which $-\sigma_w/2M_{s1}h_1 + H_{c1} = 0$ is within a range of $100°C \leqq T_0 < T_{c1}$, and a minimum value $\Delta H_{max}$ of $-\sigma_w/2M_{s1}h_1 + H_{c1}$ is not larger than -500 oersteds.

The temperature $T_o$ at which $-\sigma_w/2M_{s1}h_1 + H_{c1} = 0$, and the minimum value $\Delta H_{max}$ of $-\sigma_w/2M_{s1}h_1 + H_{c1}$ respectively correspond simply to the power at which the transfer between the exchange-interacted first magnetic thin film and second magnetic thin film commences and an external magnetic field for recording at which the transfer operation proceeds in stable fashion. The selection of these values guarantees the reliability at the time of reproduction, and guarantees the characteristics, such as a CN ratio.

## BRIEF DESCRIPTION OF THE DRAWINGS

Figure 1 is an enlarged, sectional view of an essential part of a magneto-optical recording medium according to the invention;

Figure 2 is a schematic view illustrating magnetized states of the magnetic double-layer film in a photo intensity modulation recording system;

Figure 3 is a characteristic view showing the relationship between the value of $H_{c1} - H_{w1}$ and the temperature;

Figure 4 is a graph showing the relationship between the temperature $T_o$ at which $H_{c1} - H_{w1} = 0$ and the maximum readout power value $Pr_{max}$;

Figure 5 is a graph showing the relationship between the minimum value $\Delta H_{max}$, of the $H_{c1} - H_{w1}$ value, and the maximum value $H_{max}$ of an external magnetic field for recording;

Figure 6 is a graph showing the relationship between the maximum value $H_{max}$ of the external magnetic field for recording and the C/N value; and

Figure 7 is a graph showing the temperature characteristic of the value of $H_{c1} - H_{w1}$ for different types of magneto-optical disks fabricated in a test of the invention.

## DETAILED DESCRIPTION AND EMBODIMENTS OF THE INVENTION

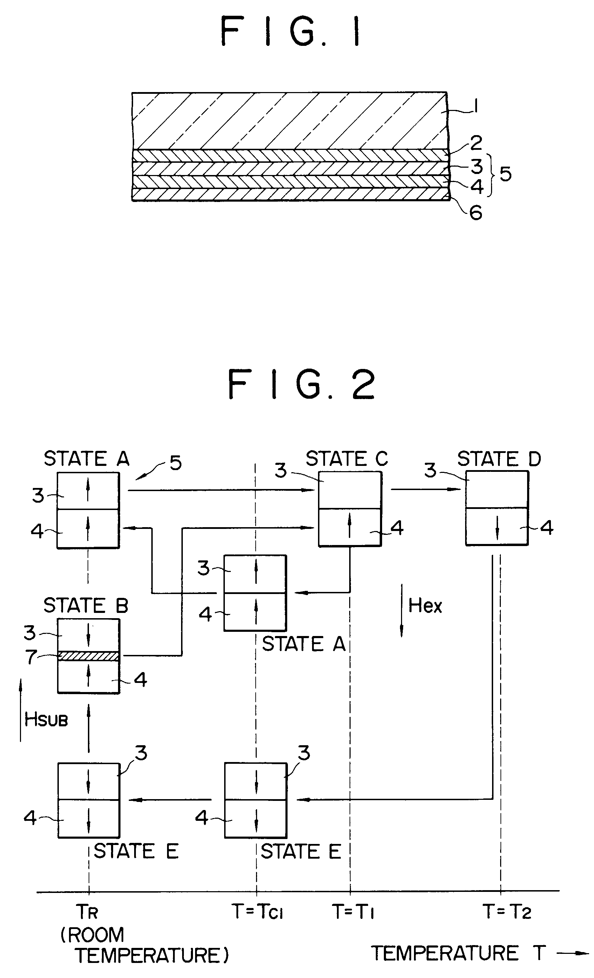

Reference is now made to the accompanying drawings and particularly, to Figure 1.

In Figure 1, there is shown a magneto-optical recording medium M which includes a transparent substrate 1 such as a glass substrate, a polycarbonate substrate or the like, and a magnetic double-layered film 5 which consists of a first magnetic thin film 3 and a second magnetic thin film 4, and which is formed on one main surface (lower surface as viewed in the figure) of the substrate 1 through a transparent dielectric layer 2 functioning as a protective film or interference film. In this instance, although the magnetic double-layered film 5 is covered on the surface thereof with a protective film 6, the protective film 6 may not be used. Likewise, the transparent dielectric film 2 may be omitted. In some cases, the magnetic double-layered film 5 may be sandwiched between transparent dielectric films, and a reflection film such as a metallic film may be provided on an opposite side of the transparent substrate 1, thereby enhancing magneto-optical characteristics including, for example, the Kerr angle of rotation.

Both the first magnetic thin film 3 and the second magnetic thin film 4 exhibit vertical magnetic anisotropy. These films are each formed of an amorphous alloy material consisting of at least one of the rare earth (RE) metals such as Tb, Gd and the like, and at least one of the transition metals (TM) such as Fe, Co, Ni and the like. In both cases, the content of the rare earth element is generally in the range of 10 to 40 atomic %, and the content of the transition metal is in the range of 60 to 90 atomic %. Elements other than the rare earth element and the transition metal may be added in small amounts, if necessary, provided that the Curie point $T_{c1}$ of the first magnetic thin film 3 should be set to be higher than the Curie point $T_{c2}$ of the second magnetic thin film 4.

In the rare earth element-transition metal amorphous alloy magnetic materials, the magnetic moment of the rare earth element except for Nd or Sm, and the magnetic moment of the transition metal are interacted in an antiparallel fashion. As a result, the ferrimagnetism is developed and the net magnetization is a difference between the sublattice magnetizations of the rare earth element and the transition metal. For example, if the positive and negative values corresponding to the directions of the magnetization are taken into account, the net magnetization is the sum of the respective sublattice magnetizations. In contrast, if Nd or Sm is used as the rare earth element, the magnetic moment of the rare earth element and the magnetic moment of the transition metal are coupled parallel, thereby exhibiting so-called ferromagnetism. In this case, the net magnetization is the sum of the sublattice magnetizations of the rare earth element and the transition metal.

As stated above, the magneto-optical recording medium of the invention has a fundamental arrangement wherein an exchange-interacted magnetic double-layer film is used as a recording layer. For the purpose of controlling an interfacial magnetic wall energy between the first magnetic thin film 3 and the second magnetic thin film 4, the recording layer may be in the form of a three-layer structure wherein a third magnetic thin film is provided between the magnetic thin films 3 and 4. This third magnetic thin film should have an in-plane magnetic anisotropy or a small vertical magnetic anisotropy. Particularly when the film has a vertical magnetic anisotropy, the anisotropy should preferably be significantly smaller than the vertical magnetic anisotropies of the first and second magnetic thin films 3 and 4 (e.g. not larger than $1 \times 10^{-6}$ erg/cm$^3$). By the existence of the third magnetic thin film, the interfacial magnetic wall can be present in stable fashion, thereby permitting the designing margin for characteristics of the magnetic thin films 3, 4 to be enlarged and the interfacial magnetic wall energy to be lowered, with the possibility that an external sub-magnetic field can be reduced.

The necessary conditions for performing photo intensity modulation recording in a photo intensity modulation recording system and the magneto-optical recording medium are now described.

In the photo intensity modulation recording system, as schematically shown in Figure 2 wherein the respective states of magnetization in the first magnetic thin film 3 and the second magnetic thin film 4 are indicated by arrows as corresponding to the temperature T, information is recorded as "0" or "1" corresponding to a state (state A) wherein the directions of magnetization of both magnetic thin films 3, 4 are the same or a state (state B) wherein the directions are opposite at room temperature $T_R$.

These states are recorded by two-stage heating steps, including application of an external magnetic field $H_{ex}$, and a laser beam irradiation. The procedure is as described below.

Initially, while a laser beam is irradiated on a portion, for example, in state A, the intensity and the irradiation time of the laser beam are controlled by modulation in correspondence with recording signals in such a way that the heating temperature from the laser beam is a temperature (first heating temperature $T_1$) within a range of substantially not lower than the Curie point $T_{c1}$ of the first magnetic thin film, but at which the magnetization of the second magnetic thin film 4 is not inverted. By the heating, the first magnetic thin film is turned into a state (state C) where the magnetization is lost. When the temperature of the first magnetic thin film 3 and the second magnetic thin film 4 is lowered down to the Curie point $T_{c1}$ of the first magnetic thin film 3 after completion of the heating, magnetization is developed in the first magnetic thin film 3. At this time, when the exchange-interacting force with the second magnetic thin film 4 is set as predominant, the direction of the magnetization of the first magnetic thin film 3 is in conformity with and the same as the direction of the magnetization of the second magnetic thin film 4. Accordingly, the magnetic double-layer film 5 results in state A and, for example, the information "0" is recorded.

Then, when the heating temperature is changed to a temperature (i.e. a second heating temperature, $T_2$) which is not lower than the first heating temperature $T_1$, and at which the magnetization of the second magnetic thin film 4 is inverted by application of an external magnetic field $H_{ex}$, the first magnetic thin film loses its magnetization. At the same time, the second magnetic thin film 4 is converted into state D where its magnetization is inverted. After completion of the heating, when the temperature of the first and second magnetic thin films 3, 4 is lowered down to the Curie point $T_2$ of the first magnetic thin film 3, the first magnetic thin film 3 is in a state (state E) where the magnetization of the film 3 is arranged in a direction opposite to that of state A by the exchange-interaction force with the second magnetic thin film 4. At this stage, when the direction of the magnetization of the second magnetic thin film is inverted in the vicinity of room temperature $T_R$ by application of an external sub-magnetic field $H_{sub}$, which is in a direction opposite to that of the external magnetic field $H_{ex}$, there appears a magnetized state where a magnetic wall 7 is produced between the first magnetic thin film 3 and the second magnetic thin film 4, or a state where only the direction of the magnetization of the first magnetic thin film is opposite to that of state A. By this, the magnetic double-layer film 5 is in state B and, for example, the information "1" is recorded.

It will be noted that Figure 2 illustrates the principle using a transition metal sublattice-rich (TM-rich) composition at room temperature. With the case using a rare earth element sublattice-rich (RE-rich) composition at room temperature, because of the compensating point, the direction of the total magnetization is changed from an upward direction ($\uparrow$) in the figure to a downward direction ($\downarrow$) during the course of transfer, for example from state C to state D. Accordingly, the direction of the external magnetic field $H_{ex}$ has to be changed to an upward direction ($\uparrow$) as viewed in the figure. More particularly, with the rare earth element sublattice-rich (RE-rich) composition, the external magnetic field $H_{ex}$, and the external sub-magnetic field $H_{sub}$, have to be the same with respect to the direction.

In the photo intensity modulation recording system, information is recorded as "0" or "1", corresponding to state A or B respectively. Moreover, overwriting on the information is possible irrespective of the states A and B. More particularly, when the medium is heated to the first heating temperature $T_1$, or the second heating temperature $T_2$, in either state A or state B, state C invariably results. Accordingly, selection of the heating temperature $T_1$ or $T_2$ makes it possible to rewrite state A or B through the above-described procedure, irrespective of the original state being in state A or B.

For ensuring overwriting in the photo intensity modulation recording system, various characteristic requirements for the first and second magnetic thin films 3, 4 should be satisfied. Such requirements for the first and second magnetic thin films 3, 4 are described.

In the magneto-optical recording medium of the photo intensity modulation recording system, an exchange energy works at the interface of the built-up layer of the first magnetic thin film 3 and the second magnetic thin film 4, by which the magnetic wall 7 is established in state B. The interfacial magnetic wall energy $\sigma_w$ is expressed according to the equation

$$\sigma_w \simeq 2 \left( \sqrt{A_1 K_1} + \sqrt{A_2 K_2} \right) \tag{3}$$

wherein $A_1$ and $A_2$ are, respectively, exchange constants of the first magnetic thin film 3 and the second magnetic thin film 4, and $K_1$ and $K_2$ are, respectively, vertical magnetic anisotropy constants of the first magnetic thin film 3 and the second magnetic thin film 4.

A first necessary condition for overwriting is not to cause the transfer from state B to state A at room temperatures ranging from -20°C to 60°C. This condition at room temperature is expressed as follows:

$$H_{c1} > H_{w1} = \sigma_w / 2 M_{s1} h_1. \tag{4}$$

A second necessary condition is not to cause the transfer from state B to state E. This condition at room temperature is expressed as follows:

$$H_{c2} > H_{w2} = \sigma_w / 2 M_{s2} h_2. \tag{5}$$

In addition, in state E, the first magnetic thin film has not to be inverted by the external sub-magnetic field $H_{sub}$. This is a third necessary condition. For this purpose, the following inequality (6) has to be satisfied at room temperature:

$$H_{c1} \pm H_{w1} > H_{sub}. \tag{6}$$

The symbols "+" and "-" in the left side of the inequality (6) are intended to mean that when the first magnetic thin film 3 is a rare earth element-rich film and the second magnetic thin film 4 is a transition metal-rich film, "+" is used, and when the first and second magnetic thin films are both a transition metal-rich film, "-" is used.

In order to cause the transfer from state E to state B, the following inequality has to be satisfied at room temperature:

$$H_{c2} + H_{w2} < H_{sub}. \tag{7}$$

To cause the transfer from state C to state A when the heating temperature is in the vicinity of the Curie point, $T_{c1}$, of the first magnetic thin film 3 or to permit the direction of magnetization of the first magnetic thin film 3 in alignment with the direction of magnetization of the second magnetic thin film, the following condition in the vicinity of the Curie point, $T_{c1}$, should be satisfied:

$$H_{w1} > H_{c1} + H_{ex}. \tag{8}$$

In order not to cause the transfer of from state C to state E, the following condition has to be satisfied in the vicinity of the Curie point $T_{c1}$:

$$H_{c2} - H_{w2} > H_{ex}. \tag{9}$$

In the above inequalities, $H_{w1}$ and $H_{w2}$ are, respectively, a member of an exchange force from the other layer and are, respectively, those values defined in the equations (4) and (5). $H_{c1}$ is a coercive force, $M_{s1}$ is a saturation magnetization, and $h_1$ is a thickness of the first magnetic thin film. $H_{c2}$ is a coercive force, $M_{s2}$ is a saturation magnetization, and $h_2$ is a thickness of the second magnetic thin film. $\sigma_{w2}$ is an interfacial magnetic wall energy, $H_{ex}$ is an external magnetic field which is applied at the time of recording, and $H_{sub}$ is an external sub-magnetic field applied in a direction opposite to the external magnetic field.

In the photo intensity modulation recording system, the magneto-optical recording medium should satisfy the above necessary conditions. Further, whether smooth overwriting proceeds or not depends on whether the transfer operation is effected in stable fashion. The transfer operation means that when the direction of the sublattice magnetization of, for example, Fe in the first magnetic thin film 3 is antiparallel with that of the second magnetic thin film 4, the direction of the magnetization of the first magnetic thin film 3 is inverted to conform with the direction of the magnetization of the second magnetic thin film. This inversion should not be influenced with the direction of a magnetic field which is externally applied.

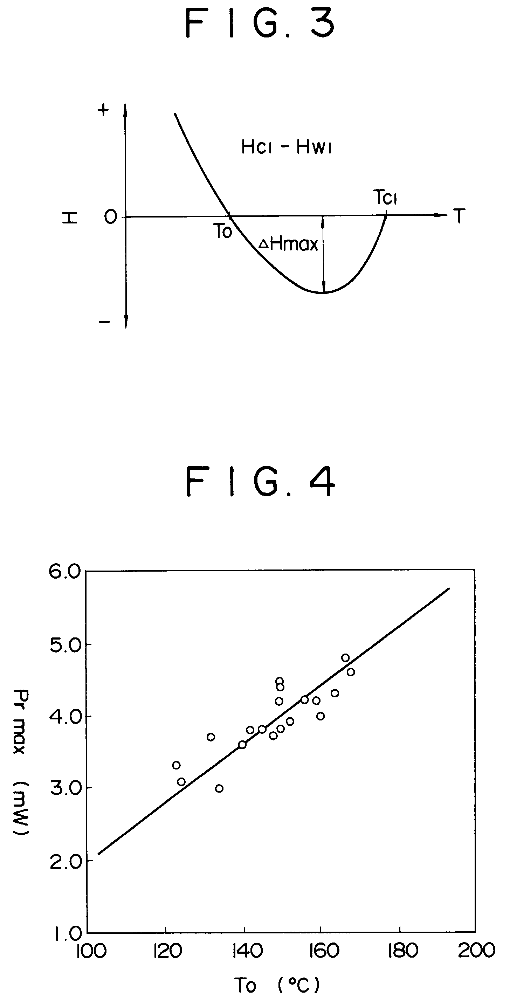

Assuming this operation with regard to a static inversional magnetic field characteristic, there is obtained a graph shown in Figure 3. In this figure, there is shown a temperature change of the inversional magnetic field of the first magnetic thin film 3, expressing the sum $(H_{c1} - H_{w1})$ of the coercive force $H_{c1}$ inherent to the first magnetic thin film and a component of the exchange force, and $H_{w1}$ from the other magnetic thin film.

As will be apparent from Figure 3, the value of $H_{c1} - H_{w1}$ is lowered as the temperature rises. Over a certain temperature, the value is changed to a minus side. The conditions for realizing the transfer are as shown in the inequality (8), which is satisfied for the first time when the value of $H_{c1} - H_{w1}$ in Figure 3 is changed to the minus side.

Accordingly, importance is considered to be placed on the shape of a portion projecting toward the minus side of the curve of the $H_{c1} - H_{w1}$ values. Two parameters which are considered to determine such a shape are defined for evaluation of a magneto-optical recording medium.

One of the defined parameters is a temperature at which $H_{c1} - H_{w1} = 0$. This temperature is taken as $T_0$. Another parameter is a minimum value of $H_{c1}, - H_{w1}$, which is taken as $\Delta H_{max}$. It will be noted that this value is handled as a negative value when the value of $H_{w1} - H_{c1}$ appears at the same side where $H_{w1} + H_{c1}$ appears (relative to a zero magnetic field).

Electric signal characteristics of a magneto-optical recording medium are checked using the temperature $T_o$, and the minimum value $\Delta H_{max}$ as the parameters. Electrical characteristics which are considered to correspond to these parameters are a maximum value of readout power $Pr_{max}$, and a minimum value of an external magnetic field for recording $H_{max}$, under which the transfer operation proceeds in stable fashion. The former value especially indicates a limit of laser power at the time of readout. If the laser power is increased to exceed such a value, recorded information will be lost.

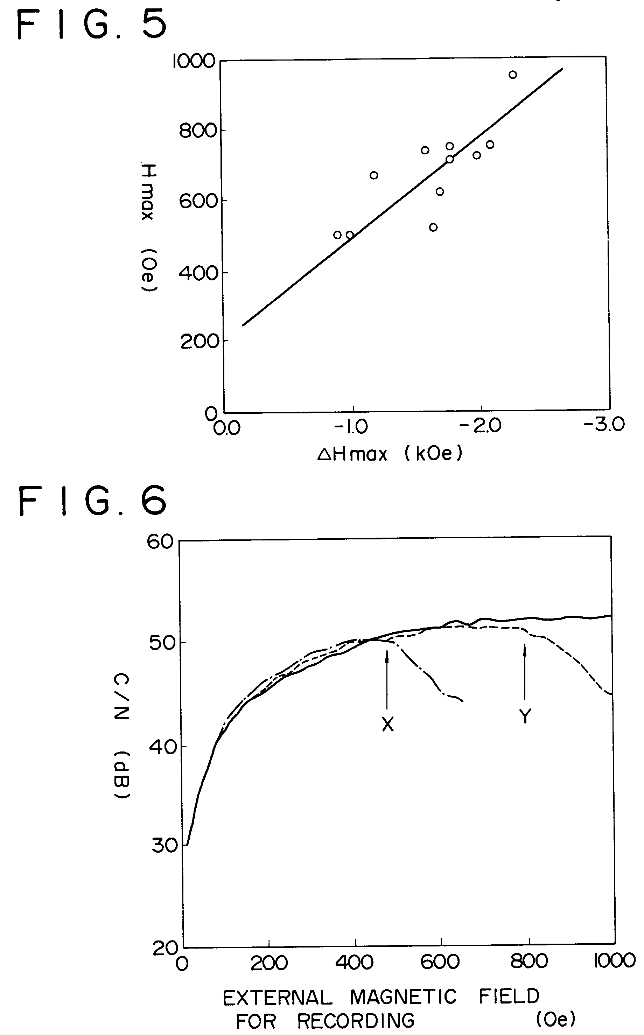

Figure 4 shows the interrelation between the temperature $T_o$, and the maximum readout power value $Pr_{max}$, and Figure 5 shows the interrelation between the minimum value $\Delta H_{max}$ of the $H_{c1} - H_{w1}$ value and the maximum external magnetic field for recording $H_{max}$.

As will be apparent from these figures, these interrelations are substantially linear, from which it will be understood that the measurements of the temperature $T_o$, and the minimum value $\Delta H_{max}$, which are the characteristics of the magnetic thin films of the magneto-optical recording medium, ensure supposition of the maximum readout power value $Pr_{max}$, which is an electric signal characteristic, and the maximum value of the external magnetic field for recording $H_{max}$.

The maximum value of the readout power $Pr_{max}$ has a lower limit, and if $Pr_{max}$ is too low, transfer (erasure) takes place at low temperatures, with an attendant problem of the reliability at the time of reproduction. Accordingly, the temperature $T_o$ should preferably be 100°C at the lowest. When the temperature $T_o$ is set at a level of not lower than 100°C, very stable readout becomes possible, provided that information is reproduced at a readout or reproduction power level of not higher than 2.0 mW. If the temperature rise in a drive apparatus is 60°C, reproduction to a level of 1.0 mW becomes possible. The upper limit is within a range of not exceeding the Curie point $T_{c1}$ of the first magnetic thin film 3. In order to make a wide margin, a temperature of $T_{c1}$ -30°C is preferred.

The maximum external magnetic field value $H_{max}$ does not directly take part in the transfer operation, but recording characteristics and particularly C/N are varied depending on the maximum value $H_{max}$. A higher value is better.

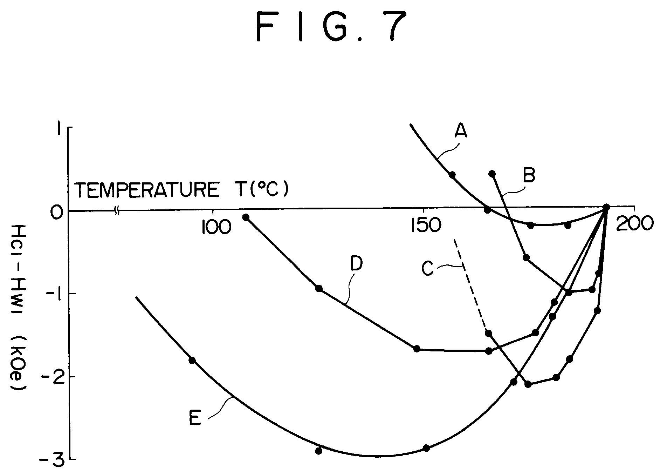

For instance, as shown in Figure 6, when the first magnetic thin film is changed to different thicknesses of 200 angstroms (solid line), 300 angstroms (broken line) and 400 angstroms (dot-and-dash line), the C/N characteristic is varied. The C/N characteristic becomes maximum at a point indicated by arrow Y for 300 angstroms, and at a point indicated by arrow X for 400 angstroms. The point indicated by arrow X or Y is the maximum value $H_{max}$ of the external magnetic field. Over the point, the transfer does not proceed in stable fashion, with C/N being gradually degraded.

Assuming that the C/N value should be at least 47 to 48 dB, the lowest external magnetic field necessary for recording is 370 oersteds based on judgment from the C/N value. Thus, the maximum value $H_{max}$ of the external magnetic field should be not smaller than 370 oersteds. In order to attain this level of the maximum value $H_{max}$ of not smaller than 370 oersteds, it will be seen from Figure 5 to make the minimum value of $\Delta H_{max}$ of $H_{c1} - H_{w1}$ at a level of not larger than -500 oersteds (i.e. an absolute value of not lower than 500 oersteds).

Thus, proper selection of the temperature $T_o$ at which $H_{c1} - H_{w1} = 0$ and the minimum value $\Delta H_{max}$ of $H_{c1} - H_{w1}$ ensures formation of a magneto-optical recording medium which has good electric signal characteristics.

The temperature $T_o$ at which $H_{c1} - H_{w1} = 0$ and the minimum value $\Delta H_{max}$ of $H_{c1} - H_{w1}$ can be respectively set within the ranges defined before by controlling the compositions and the thicknesses of the first magnetic thin film 3, the second magnetic thin film 4 and, optionally, the third magnetic thin film provided as an intermediate layer.

Magneto-optical disks were made to inspect the relationships stated earlier.

Magneto-optical disks A to E were fabricated and each had a three-layer structure having an intermediate layer. In these magneto-optical disks, the first magnetic thin film and the second magnetic thin film had, respectively, common compositions and thicknesses. More particularly, the first magnetic thin film has a composition of $Tb_{20}(Fe_{91}Co_5Cr_4)_{80}$, a coercive force of not lower than 25 KOe at room temperature, a Curie point of 170°C, and a thickness of 300 angstroms. On the other hand, the second magnetic thin film had a composition of $(Gd_{75}Tb_{25})_{26}(Fe_{66}CO_{30}Cr_6)_{74}$, a coercive force of not lower than 3 KOe at room temperature, a compensating temperature of 200°C, a Curie point of not lower than 300°C, and a thickness of 800 angstroms.

In these magneto-optical disks, the composition and thickness of the intermediate layer (third magnetic thin film) were changed to vary the temperature $T_o$ at which $H_{c1} - H_{w1} = 0$ and the minimum value $\Delta H_{max}$ of $H_{c1} - H_{w1}$. The composition and thickness of the intermediate layer in the respective magneto-optical disks are shown in the Table below:

Table

| | Intermediate Layer | |
| --- | --- | --- |
| | Composition | Thickness (angstroms) |
| Disk A | $Gd_{45}(Fe_{91}Co_5Cr_4)_{55}$ | 200 |
| Disk B | $Gd_{40}(Fe_{91}CO_5Cr_4)_{60}$ | 100 |
| Disk C | $Gd_{32}(Fe_{91}Co_5Cr_4)_{68}$ | 100 |
| Disk D | $Gd_{32}(Fe_{91}Co_5Cr_4)_{68}$ | 40 |
| Disk E | $Gd_{28}(Fe_{91}Co_5Cr_4)_{72}$ | 50 |

In Figure 7, there is shown the temperature change of $H_{c1} - H_{w1}$ of the respective magneto-optical disks.

Attention is now paid to $T_o$ and $\Delta H_{max}$ of the respective magneto-optical disks. The $\Delta H_{max}$ is about -3000 Oe for the disk E, about -2000 Oe for the disks C and D, about -1000 Oe for the disk B, and about -200 Oe for the disk A. The value of $T_o$ is about 170°C for the disks A and B, about 160°C for the disk C, about 100°C for the disk D, and about 60°C for the disk E.

These magneto-optical disks were set in a recording and reproducing apparatus to check overwriting characteristics. The checked characteristics include laser power $Pr_{max}$ at which a transfer operation (erasing operation) starts, and a maximum value $H_{max}$ of an external magnetic field at which the transfer can be normally performed. These characteristics are indices as to whether or not the transfer, which is the most important operation during overwriting, proceeds smoothly.

From this point of view, $Pr_{max}$ is not less than 4 mW for the disks B and C and about 2 mW for the disk D, within which information was not lost when reproduced. In contrast, $Pr_{max}$ was not held for the disk E by which recorded data were erased by the action of the reproduction power.

With regard to the maximum external magnetic field value $H_{max}$ at which the transfer is normally operated, its value is not less than 800 Oe for the disks C and D. With the disk B, a value of 500 Oe is ensured. Thus, record signals with a good C/N value can be obtained. In contrast, with the disk A, a good C/N value could not be obtained.

As will be apparent from the foregoing description, the magneto-optical recording medium of the invention not only satisfies the necessary conditions for carrying out the photo intensity modulation recording system, but also optimizes the shape of a portion projecting toward the minus side of a curve which is drawn with the values of $H_{c1} - H_{w1}$ ($= -\sigma_w/2M_{s1}h_1 + H_{c1}$). Thus, very stable readout and transfer operations are possible with a satisfactory C/N value.

Although various minor changes and modifications might be proposed by those skilled in the art, it will be understood that we wish to include within the claims of the patent warranted hereon all such changes and modifications as reasonably come within our contribution to the art.

## Claims

1. A magneto-optical recording medium of the type which comprises, on a transparent substrate, a first magnetic thin film and a second magnetic thin film magnetically coupled with each other to form a built-up layer, and wherein information signals are rewriteable by control of a heating temperature, wherein when the first magnetic thin film has a Curie point $T_{c1}$, a coercive force $H_{c1}$, a saturation magnetization $M_{s1}$, and a thickness $h_1$, the second magnetic thin film has a Curie point $T_{c2}$, a coercive force $H_{c2}$, a saturation magnetization $M_{s2}$, and a thickness $h_2$, and wherein a magnetic wall energy is $\sigma_w$, an external magnetic field applied at the time of recording is $H_{ex}$, and an external sub-magnetic field is $H_{sub}$, the following relationships are satisfied at room temperature

$$H_{c1} > \sigma_w/2M_{s1}h_1$$

$$H_{c2} > \sigma_w/2M_{s2}h_2$$

$$H_{c1} \pm \sigma_w/2M_{s1}h_1 > H_{sub}$$

$$H_{c2} \pm \sigma_w/2M_{s2}h_2 < H_{sub}.$$

and the following relationships being satisfied in a vicinity of the Curie point $T_{c1}$

$$\sigma_w/2M_{s1}h_1 > H_{c1} + H_{ex}$$

$$H_{c2} - \sigma_w/2M_{s2}h_2 > H_{ex}.$$

said medium being
characterized by
a temperature $T_o$ at which $- \sigma_w/2M_{s1}h_1 + H_{c1} = 0$ being within a range of $100°C \leq T_o < T_{c1}$ and a minimum value $\Delta H_{max}$ of $- \sigma_w/2M_{s1}h_1 + H_{c1}$ being not larger than -500 oersteds.

2. A magneto-optical recording medium according to claim 1 wherein said first magnetic thin film and said second magnetic thin film are respectively made of amorphous alloys of from 10 to 40 atomic percent of at least one rare earth element and from 60 to 90 atomic percent of at least one transition metal, provided that the Curie point $T_{c2}$ of said second magnetic thin film is higher than the Curie point $T_{c1}$ of said first magnetic thin film .

3. A magneto-optical recording medium according to claim 1 further comprising a third magnetic thin film provided between said first magnetic thin film and said second magnetic thin film.

4. A magneto-optical recording medium according to claim 3 wherein said third magnetic thin film has an in-plane magnetic anisotropy.

5. A magneto-optical recording medium according to claim 3 wherein said third magnetic thin film has a vertical magnetic anisotropy which is smaller than vertical magnetic anisotropies of said first magnetic thin film and said second magnetic thin film.

6. A magneto-optical recording medium according to claim 5 wherein the vertical magnetic anisotropy of said third magnetic thin film is not larger than $1 \times 10^{-6}$ erg/cm$^3$.

7. A magneto-optical recording medium according to claim 1 further comprising a transparent dielectric film provided between said transparent substrate and said first magnetic thin film, and a protective layer formed on said second magnetic thin film.

**Patentansprüche**

1. Magnetooptischer Aufzeichnungsträger vom Typ, der auf einem transparenten Substrat einen ersten magnetischen Dünnfilm und einen zweiten magnetischen Dünnfilm aufweist, die magnetisch miteinander gekoppelt sind, um eine Aufbauschicht zu bilden, und bei dem Informationssignale durch Steuerung einer Erwärmungstemperatur umschreibbar sind, wobei dann, wenn der erste magnetische Dünnfilm den Curiepunkt $T_{c1}$, die Koerzitivfeldstärke $H_{c1}$, die Sättigungsmagnetisierung $M_{s1}$ und die Dicke $h_1$ aufweist, der zweite magnetische Dünnfilm den Curiepunkt $T_{c2}$, die Koerzitivfeldstärke $H_{c2}$, die Sättigungsmagnetisierung $M_{s2}$ und die Dicke $h_2$ aufweist, und die magnetische Wandenergie $\sigma_w$ ist, ein beim Aufzeichnen angelegtes äußeres Magnetfeld $H_{ex}$ ist und ein äußeres Untermagnetfeld $H_{sub}$ ist, die folgende Beziehung bei Raumtemperatur erfüllt ist:

$$H_{c1} > \sigma_w / 2M_{s1}h_1$$

$$H_{c2} > \sigma_w / 2M_{s2}h_2$$

$$H_{c1} \pm \sigma_w / 2M_{s1}h_1 > H_{sub}$$

$$H_{c2} \pm \sigma_w / 2M_{s2}h_2 < H_{sub},$$

und die folgenden Beziehungen in der Nähe des Curiepunkts $T_{c1}$ erfüllt sind:

$$\sigma_w / 2M_{s1}h_1 > H_{c1} + H_{ex}$$

$$H_{c2} - \sigma_w / 2M_{s2}h_2 > H_{ex},$$

**gekennzeichnet durch** eine Temperatur $T_0$, bei der in einem Bereich 100 °C $\leq T_0 \leq T_{c1}$ die Beziehung $-\sigma_w / 2M_{s1}h_1$ + $H_{c1}$ = 0 gilt und der Minimalwert $\Delta H_{max}$ von $-\sigma_w / 2M_{s1}h_1$ + $H_{c1}$ nicht größer als 500 Oersted ist.

2.  Magnetooptischer Aufzeichnungsträger nach Anspruch 1, bei dem der erste magnetische Dünnfilm und der zweite magnetische Dünnfilm jeweils aus amorphen Legierungen mit 10 bis 40 Atomprozent mindestens eines Seltenerdelements und 60 bis 90 Atomprozent mindestens eines Übergangsmetalls bestehen, vorausgesetzt, daß der Curiepunkt $T_{c2}$ des zweiten magnetischen Dünnfilms höher als der Curiepunkt $T_{c1}$ des ersten magnetischen Dünnfilms ist.

3.  Magnetooptischer Aufzeichnungsträger nach Anspruch 1, ferner mit einem dritten magnetischen Dünnfilm, der zwischen dem ersten magnetischen Dünnfilm und dem zweiten magnetischen Dünnfilm vorhanden ist.

4.  Magnetooptischer Aufzeichnungsträger nach Anspruch 3, bei dem der dritte magnetische Dünnfilm in der Ebene liegende magnetische Anisotropie aufweist.

5.  Magnetooptischer Aufzeichnungsträger nach Anspruch 3, bei dem der dritte magnetische Dünnfilm vertikale magnetische Anisotropie aufweist, die kleiner als die vertikalen magnetischen Anisotropien des ersten magnetischen Dünnfilms und des magnetischen Dünnfilms ist.

6.  Magnetooptischer Aufzeichnungsträger nach Anspruch 5, bei dem die vertikale magnetische Anisotropie des dritten magnetischen Dünnfilms nicht größer als 1 x $10^{-6}$ erg/cm$^3$ ist.

7.  Magnetooptischer Aufzeichnungsträger nach Anspruch 1, ferner mit einem transparenten dielektrischen Film, der zwischen dem transparenten Substrat und dem ersten magnetischen Dünnfilm vorhanden ist, und einer Schutzschicht, die auf dem zweiten magnetischen Dünnfilm ausgebildet ist.

## Revendications

1.  Support d'enregistrement magnéto-optique du type qui conprend, sur un substrat transparent, une première couche magnétique mince et une deuxième couche magnétique mince couplées magnétiquement l'une à l'autre pour former une couche composite, et dans laquelle des signaux d'informations peuvent être réécrits par commande d'une température de chauffage, dans lequel la première couche magnétique mince a un point de Curie $T_{c1}$, un champ coercitif $H_{c1}$, une aimantation à la saturation $M_{s1}$ et une épaisseur $h_1$, la deuxième couche magnétique mince a un point de Curie $T_{c2}$, un champ coercitif $H_{c2}$, une aimantation à la saturation $M_{s2}$ et une épaisseur $h_2$, et dans laquelle une énergie de paroi magnétique est $\sigma_w$, un champ magnétique extérieur appliqué lors de l'en- registrement est $H_{ex}$ et un sous-champ magnétique extérieur est $H_{sub}$, les relations suivantes étant vérifiées à la température ambiante:

$$H_{c1} > \sigma_w/2M_{s1}h_1;$$

$$H_{c2} > \sigma_w/2M_{s2}h_2;$$

$$H_{c1} \pm \sigma_w/2M_{s1}h_1 > H_{sub};$$

$$H_{c2} \pm \sigma_w/2M_{s2}h_2 < H_{sub},$$

et les relations suivantes étant vérifiées à proximité du point de Curie $T_{c1}$:

$$\sigma_w/2M_{s1}h_1 > H_{c1} + H_{ex};$$

$$H_{c2} - \sigma_w/2M_{s2}h_2 > H_{ex},$$

ledit support d'informations étant caractérisé par une température $T_0$ à laquelle $-\sigma_w/2M_{s1}h_1 + H_{c1} = 0$ comprise dans une gamme $100°C \leq T_0 \leq T_{c1}$ et une valeur minimale $\blacktriangle H_{max}$ de $-\sigma_w/2M_{s1}h_1$ pas supérieure à 500 oersteds.

2. Support d'enregistrement optique selon la revendication 1, dans lequel ladite première couche magnétique mince et ladite deuxième couche magnétique mince sont constituées respectivement d'alliages amorphes de 10 à 40 % en atomes d'au moins un élément de terre rare et de 60 à 90 % en atomes d'au moins un métal de transition, pourvu que le point de Curie $T_{c2}$ de ladite deuxième couche magnétique mince soit plus élevé que le point de Curie $T_{c1}$ de ladite première couche magnétique mince.

3. Support d'enregistrement magnéto-optique selon la revendication 1, comprenant en outre une troisième couche magnétique mince prévue entre ladite première couche magnétique mince et ladite deuxième couche magnétique mince.

4. Support d'enregistrement magnéto-optique selon la revendication 3, dans lequel ladite troisième couche magnétique mince a une anisotropie magnétique dans le plan.

5. Support d'enregistrement magnéto-optique selon la revendication 3, dans lequel ladite troisième couche magnétique mince a une anisotropie magnétique verticale qui est plus faible que les anisotropies magnétiques verticales de ladite première couche magnétique mince et de ladite deuxième couche magnétique mince.

6. Support d'enregistrement magnéto-optique selon la revendication 5, dans lequel l'anisotropie magnétique verticale de ladite troisième couche magnétique mince n'est pas supérieure à $10^{-6}$ erg/cm$^3$.

7. Support d'enregistrement magnéto-optique selon la revendication 1, comprenant en outre une couche diélectrique transparente prévue entre ledit substrat transparent et ladite première couche magnétique mince, et une couche de protection formée sur ladite deuxième couche magnétique mince.

EP 0 491 337 B1

# FIG. 1

# FIG. 2

# F I G. 3

$H_{cl} - H_{wl}$

Tcl

To

ΔHmax

# F I G. 4

# F I G. 5

# F I G. 6

# F I G. 7